# EUROPEAN PATENT SPECIFICATION

(11) **EP 2 253 151 B1**
(45) Date of publication and mention of the grant of the patent: **03.10.2012**
(21) Application number: 09723504.8
(22) Date of filing: 05.02.2009
(51) Int. Cl.: H04W 4/22, H04W 12/06, G08B 27/00

(54) **EARTHQUAKE AND TSUNAMI CELLULAR WARNING SYSTEM**
ZELLULÄRES ERDBEBEN- UND TSUNAMI-WARNSYSTEM
SYSTÈME D'ALERTE CELLULAIRE AUX SÉISMES ET AUX TSUNAMIS

(30) Priority: 18.03.2008 US 37409 P
(43) Date of publication of application: 24.11.2010
(73) Proprietor: Telefonaktiebolaget L M Ericsson (PUBL), 164 83 Stockholm (SE)
(72) Inventor: BLECKERT, Peter, S-752 31 Uppsala (SE); NÄSLUND, Mats, S-168 36 Bromma (SE); OLSSON, Magnus, S-112 38 Stockholm (SE); RUNE, Göran, S-582 52 Linköping (SE)
(74) Representative: Kühn, Friedrich Heinrich
(86) International application number: PCT/SE2009/050118
(87) International publication number: WO 2009/116927

(56) References cited:
- WO-A-2007/144872
- US-A1- 2006 040 639
- US-A1- 2007 077 922
- 3GPP: "3rd Generation Partnership Project;Technical Specification Group Services and System Aspects;Earthquake and Tsunami Warning System (ETWS)Requirements; Stage 1(Release 8)" 3GPP DRAFT; TS 22.168 V1.2.1(CLEAN), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sanya; 20080225, 31 January 2008 (2008-01-31), XP050280536
- VODAFONE: "ETWS for GSM" 3GPP DRAFT; GP-080142 - ETWS SOLUTION FOR GSM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul; 20080218, 12 February 2008 (2008-02-12), XP050019493

## Description

### TECHNICAL FIELD

The present invention discloses an improved method and corresponding devices for improved warnings in a cellular communications system.

### BACKGROUND

In the cellular communications project referred to as the Third Generation Partnership Project, 3GPP, there is defined a so called ETWS system, an Earthquake and Tsunami Warning System.

As the name implies, a function of the ETWS is to notify users of a 3GPP system of Earthquakes, Tsunamis, and possibly also other disasters, and to notify the users of what should be done.

The ETWS thus comprises two kinds of notifications, referred to as the primary and the secondary notification. A main purpose of the primary notification is to quickly alert the users to the occurrence of an Earthquake, a Tsunami or possibly some other disaster, while a main purpose of the secondary notification is to provide the users with more information regarding, for example, steps that should be taken, such as evacuation of buildings etc.

Due to the nature and purpose of an ETWS system, the time requirements for the transmission of the primary notification to the users in a certain area is as strict as 4 seconds; within this time limit the primary notification must have been transmitted to all of the users in question.

In addition, primary notifications transmitted within an ETW system should have a built-in mechanism for preventing unauthorized users from transmitting the ETWS messages, in particular the primary notification messages.

WO 2007/144872 discloses a cellular emergency notification service with messages sent to all the available cellular devices in one or more selected cells.

### SUMMARY

As has emerged from the description above, there is thus a need for a solution which will enable an ETWS system in a cellular communications system to transmit primary notifications to a large number of users within a very narrow time limit. In addition, the solution should enable the system to transmit the primary notifications in a secure manner, so that unauthorized use of the system is prevented.

Such a solution is offered by the present invention in that it discloses according to claim 1 a method for use in a cellular communications system. The method of the invention comprises the step of transmitting a predefined ETWS message which comprises a primary warning notification and verification information related to the primary warning notification to user terminals in one or more cells of the system. The predefined message is transmitted simultaneously to a plurality of user terminals in the system on a physical channel in the system which is dedicated to messages to single users.

In one embodiment of the invention, the physical channel used for the messages is a paging channel in the system.

In one embodiment of the invention, the predefined message causes the user terminals to listen for a secondary warning notification in subsequent messages on the same physical channel.

In one embodiment of the invention, the predefined message is of a message type which identifies the predefined message, and causes a receiving user terminal to treat the predefined message in a predefined manner.

In one embodiment of the invention, the predefined message is of a dedicated message type for the primary warning notification and the verification information.

In one embodiment of the invention, the primary warning notification and the verification information are comprised in information elements in the predefined message.

Suitably, the method of the invention is applied to a cellular communications system of the Wideband Code Division Multiple Access kind, WCDMA, or a system of the Time Division Synchronous Code Division Multiple Access kind, TD SCDMA.

The invention also discloses an ETWS system according to claim 8 User equipment a UE according to claim 13 in a cellular communication system in which the invention is applied.

### BRIEF DESCRIPTION OF THE DRAWINGS

The invention will be described in more detail in the following, with reference to the appended drawings, in which
Figs 1 and 2 show overviews of a system in which the invention is applied, and
Fig 3 shows a sequence of events in a first embodiment of the invention, and
Fig 4 show a message of the first embodiment of the invention, and
Fig 5 shows a sequence of events in a second embodiment of the invention, and
Fig 6 shows a message of the second embodiment of the invention, and
Fig 7 shows a flow chart of a method of the invention, and
Fig 8 shows a block diagram of an RNC of the invention, and
Fig 9 shows a block diagram of a UE of the invention.

### DETAILED DESCRIPTION

The present invention will in the following be described using terminology from the cellular system known as WCDMA, Wideband Code Division Multiple Access, and the cellular system known as TD SCDMA, Time Division Synchronous Code Division Multiple Access. This is due to the fact that the invention is primarily intended for such systems, but the terminology should not be seen as restricting the scope of protection sought for or granted to the present invention, since the invention may also be applied to other cellular systems where similar situations or problems exist.

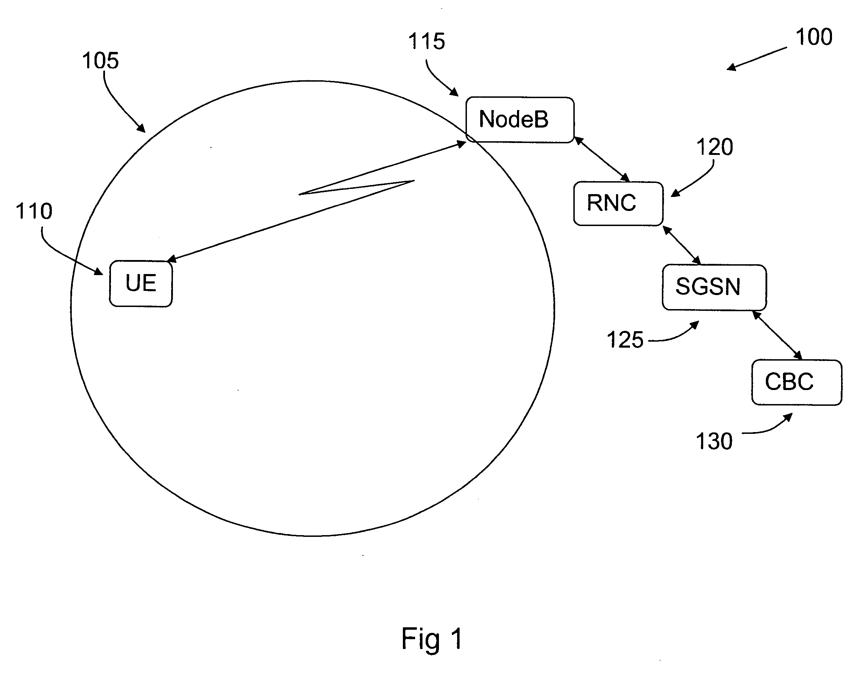

Fig 1 shows an overview of a system 100 in which the invention may be applied. The system 100 is a cellular system, and thus comprises a number of cells, one of which, 105, is shown in fig 1. The cell 105 can accommodate a number of user terminals, UEs, one of which, 110, is shown as an example.

For each cell in the system, there is also a controlling node 115, a NodeB, which has as one of its roles to control the traffic to and from the UEs in the cell 105. The system 100 also comprises a Radio Network Controller, RNC 120, as well as a Serving GPRS Support Node, SGSN 125, and a Cell Broadcast Centre, CBC 130. The functions and roles of the RNC, SGSN and CBC are well known to those skilled in the field, and will thus not be described in detail here.

As mentioned previously, the present invention is aimed at an Earthquake and Tsunami Warning System, ETWS, in a cellular system such as the system 100 in fig 1. A purpose of the invention is to enable an operator of the system 100 to transmit so called ETWS primary warning notifications to users in one or more cells in the system as rapidly as possible, and definitely within the time limit of four seconds. The primary warning notifications should also be transmitted securely, so that malicious use of the ETWS system is not possible.

In order to obtain the necessary speed for the transmission of the primary warning notification, the invention uses a physical channel which the UEs in the cell will be listening to frequently, as opposed to physical channels which the UEs listen to less frequently. The physical channel utilized by the invention to transmit the primary warning notification is suitably a so called paging channel, PCH, in the system 100.

In order to obtain the security needed for the ETWS system, the UEs will, according to the invention, receive an ETWS authentication key which is used to verity that a primary notification warning is authentic. The key is suitably first given to a UE when the UE first registers with the SGSN.

Suitably, the ETWS authentication key is changed or updated by the system at certain intervals, and stored by the UE between those intervals. As an option, in order to further increase security, users in different cells or groups of cells could be given different keys.

As noted, it may, for security reasons, be desired to periodically replace or update the key. Suppose, for instance, that a certain UE registers with the SGSN at 23:50 local time, and is given a key k1. Suppose further that the key is replaced by key k2 at 00:00 local time.

Assume further that at 00:05, an earthquake occurs which generates a primary notification warning at 00:09 local time. If this warning is protected by k2, the UE will not be able to verify it. Thus, there may be a need to send one and the same primary notification warning two times, with different keys. This may, on the other hand, create confusion as to which message that should be attempted to be verified and by which key. To this end, one may use a key-indicator. This could be a simple "version number" for the key which increases in "cyclic" fashion each time the key is updated, e.g. v = 0, 1, 2, 0, 1, 2, 0,1... The UE is given the version number of the key, and the version number is added in the message which contains the security info.

Turning now to the exact mechanism of how the primary notification warning is transmitted to the UEs concerned, the system uses the (physical) paging channel to transmit the primary notification warning simultaneously in one or more cells, but uses a predefined message type for this.

According to the invention, the UEs are programmed to treat paging messages of this message type as an ETWS message, and will notify the user of the UE in a predefined manner, or in a manner which is defined in the message, e.g. to flash a message on the display of the UE, or to beep as if a text message (SMS) had been received, etc.

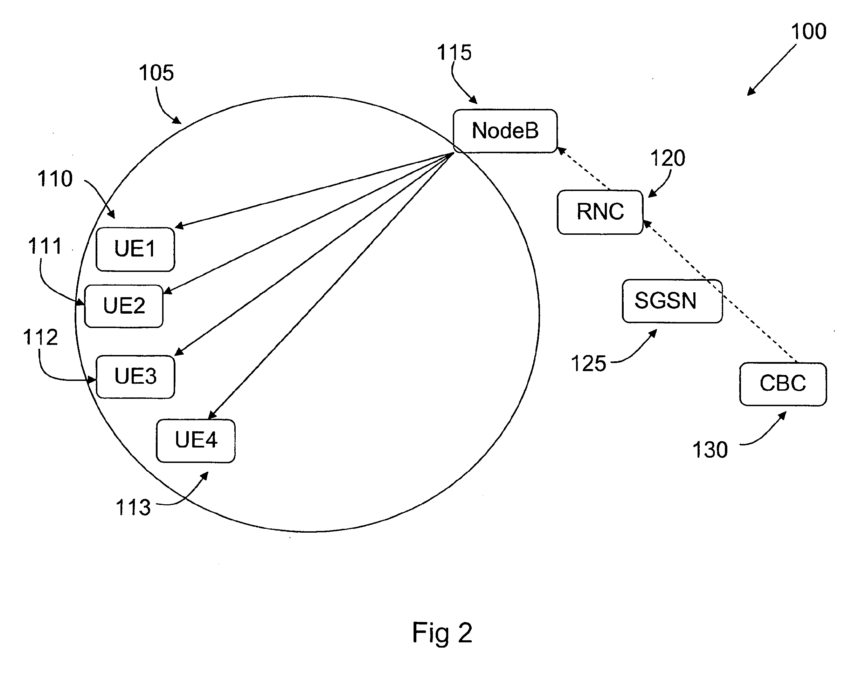

A situation with a group of UEs 110-113, in the cell 105 from fig 1 is illustrated in fig 2. The operator of the system 100 needs to transmit an ETWS primary warning notification to the UEs 110-113 in the cell 105:

The ETWS primary warning notification is initiated in the CBC 130, which communicates this to the RNC 120 (bypassing the SGSN 125, which is transparent to the ETWS message). The RNC 120 then sends a corresponding message to the NodeB 115, which transmits a paging message of the predefined message type to the UEs 110-113 in the cell 110,

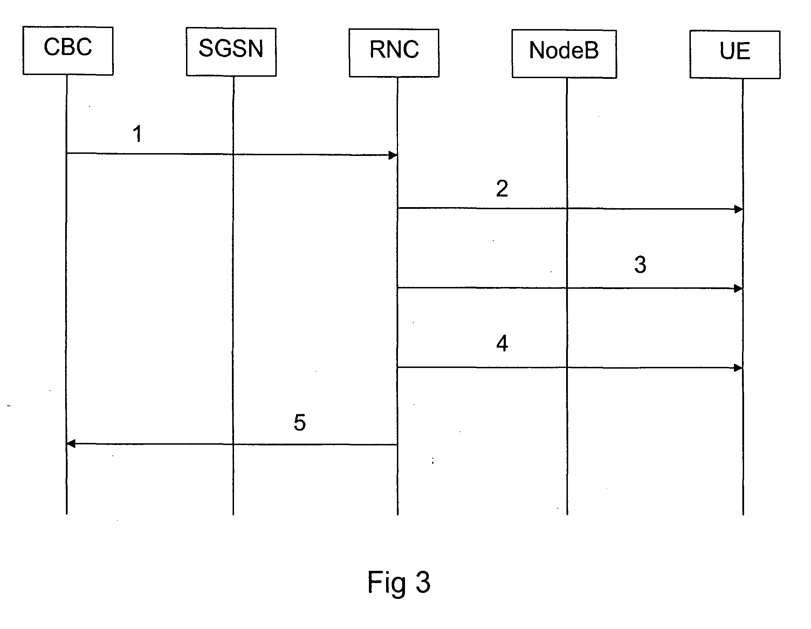

The invention discloses two embodiments by means of which the ETWS primary warning notification and the accompanying verification information can be transmitted to the UEs. The first embodiment is illustrated in fig 3, where messages between the different nodes in the system 100 are illustrated. Steps (arrows) 1 and 2 are those that must be completed within the time limit for the ETWS primary notification warning:
1: A so called Write-replace message is transmitted from the CBC to the RNC, with the SGSN being "transparent" in this context.
2: The RNC interprets the write-replace message from the CBC as an instruction to transmit the ETWS primary notification warning to the UEs in one or more of the cells which the RNC "controls" In this embodiment of the invention, the message which is sent to the UEs is a dedicated message, for example ETWS_Primary_Notification. The use of a dedicated message obviates the need for the message to comprise such data as, for example, MCC, Mobile Country Code or MNC, Mobile Network Code, which helps speed up the transmission. The dedicated message also comprises the proper verification information.
   Steps 3-5 are related to the secondary ETWS notification, but will be described briefly below:
3: The RNC transmits a so called BMC (Broadcast and Multicast Control) Schedule Message to the UE or UEs. The BMC Schedule Message describes the time locations for each BMC CBS (Cell Broadcast Service) Message and the time location of the BMC Schedule Message in the following CBS schedule period.
4: The BMC CBS Message, transmitted from the RNC to the UE or UEs, carries the Secondary Warning Message to the UEs.
5: The RNC Reports to the CBC that it has received the warning message, possibly with additional information on the number of time the message was broadcasted in the specified area. This report may vary between different systems, but may, for example, comprise an "ACK" that the message was received by the RNC from the CBC, or it may be an "ACK" from the RNC once the RNC has determined the number of times that the NodeB has broadcasted the message in the area.

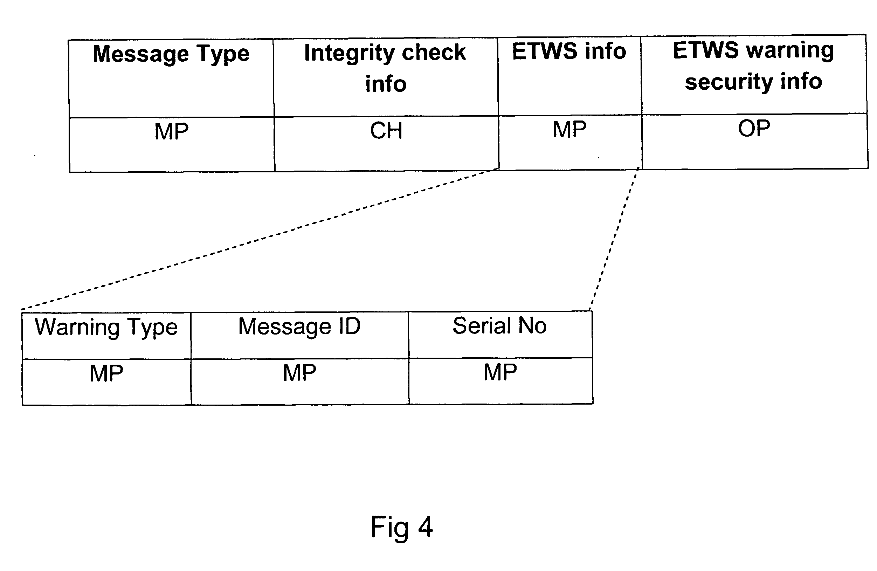

An example of an embodiment of the dedicated message which is transmitted from the RNC 120 via the NodeB 115 to the UEs 110-113 is shown in fig 4. The message is a so called Radio Resource Control, RRC message, with the fields shown in fig 4. The abbreviations in the fields of the RRC message in fig 4 should be interpreted as follows:
MP: Mandatory
CH: Conditional on history
OP: Optional

As shown in fig 4, the following fields are suggested in the RRC message:
- Message Type, MP
- Integrity Check info, MP
- ETWS info:
   o warning type, MP
   o message ID, MP
   o serial no, MP
- ETWS warning security info, OP

In this embodiment, as has been mentioned previously, the message is sent on a physical channel which is a paging channel, PCH. The logical channel which is used for this may be the CCCH to UEs in idle mode or connected mode URA_PCH, CELL_PCH or CELL_FACH states. As an alternative, the message may be transmitted on the DCCH channel to UEs in the connected mode CELL_DCH state.

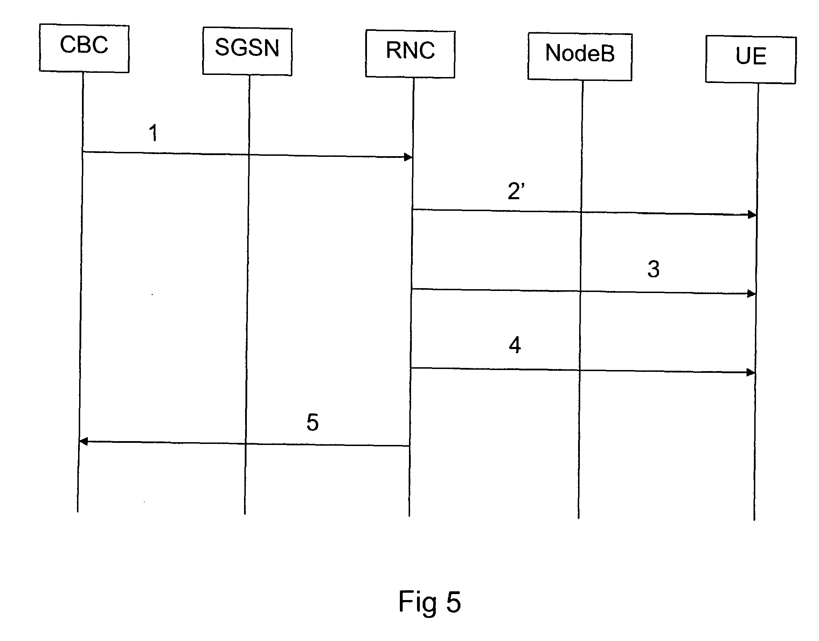

The second embodiment disclosed by the invention for transmitting the ETWS primary warning notification message and the accompanying verification information is shown in fig 5, with some of the arrows having the same numbers as in fig 3, due to the similarity between the messages which are sent.

A difference between the embodiments is the message sent from the RNC to the UEs, a message which has been given the number 2' in fig 5. The difference between the message 2' and the message 2 in fig 3 is that the message 2' is not a message which is dedicated to the ETWS primary notification message. Instead, the message 2' is a message on the paging channel in which there are Information Elements, IEs, which comprise the ETWS primary notification message and the verification information.

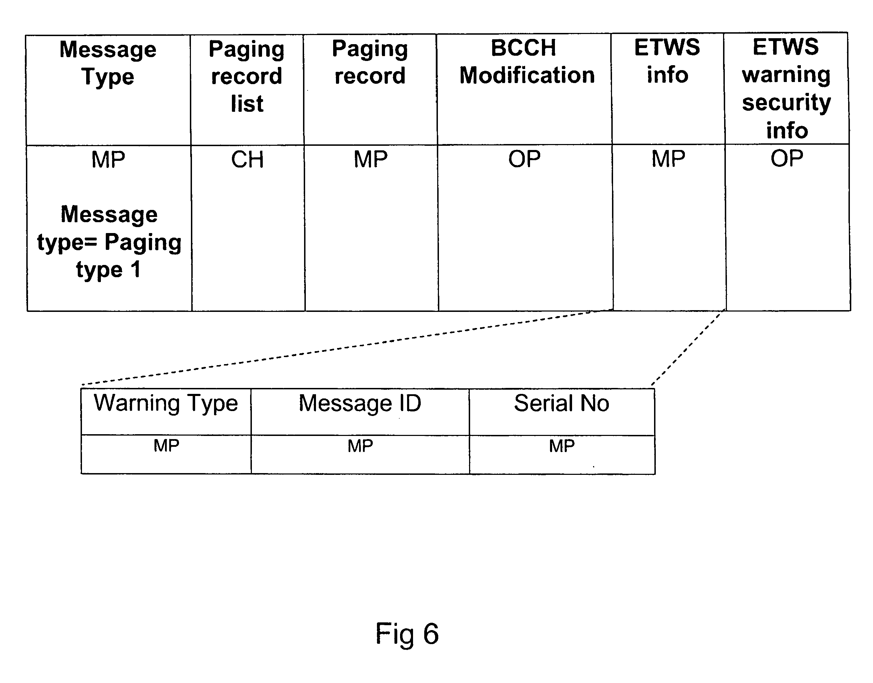

Fig 6 shows the following fields which are comprised in the RRC message of this embodiment:
- Message Type, MP, in this case PAGING TYPE 1
- Paging Record list, CH
- Paging record, MP
- BCCH Modification, OP
- ETWS info:
   o ETWS info warning type, MP
   o Message ID, MP
   o Serial no, MP
- ETWS warning security information, OP

As can be seen, only two of the IEs in the RRC message of fig 6 are related to the ETWS, and are essentially the same as those described in connection to fig 3. The other IEs in the RRC message are well known to those skilled in the field, and will for that reason not be described here.

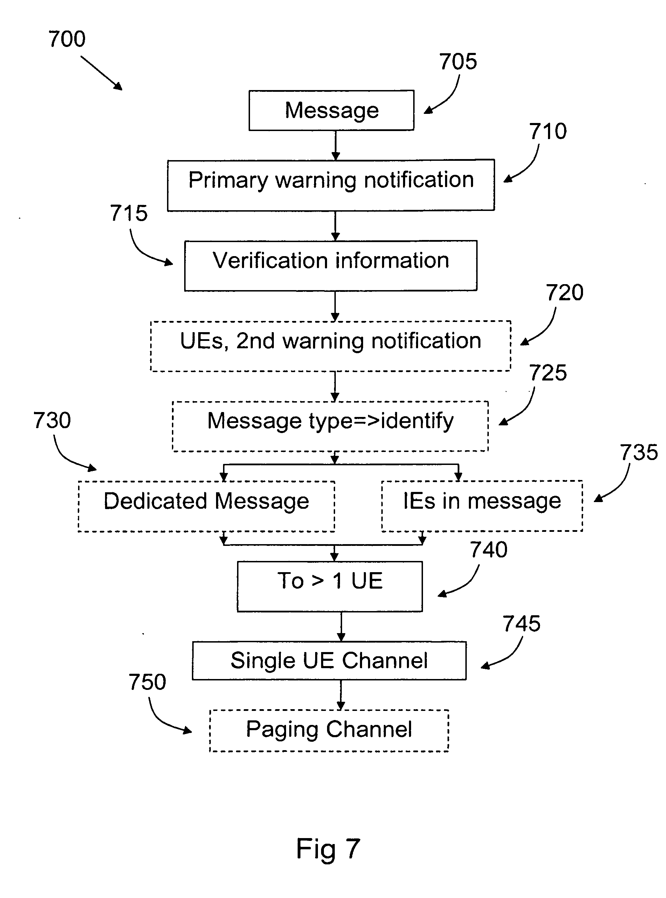

Fig 7 shows a flow chart of a method 700 of the invention. Steps which are alternatives or options are shown with dashed lines in fig 7.

As discussed above as well, the method 700 is intended for use in a cellular communications system such as the one 100 shown in fig 1, and comprises, as shown in step 705, the step of transmitting to user terminals in one or more cells of the system a predefined message which comprises a primary warning notification, step 710, and verification information which is related to the primary warning notification, step 715.

Step 720 shows that in one embodiment, the predefined message causes the user terminals to listen for a secondary warning notification in subsequent messages on the same channel, and step 725 shows that in one embodiment the predefined message is of a message type which identifies the predefined message, and causes a receiving user terminal to treat the predefined message in a predefined manner.

Step 730 shows that in one embodiment, the predefined message is of a dedicated message type for the primary warning notification and the verification information, while step 735 shows that in one embodiment, the primary warning notification and the verification information are comprised in information elements in the predefined message.

As shown in step 740, the predefined message is transmitted simultaneously to a plurality of user terminals, on a physical channel in the system which is dedicated to messages to single users, step 745.

Step 750 shows that in one embodiment, the physical channel used for the predefined message is a paging channel in the system.

As has also been mentioned previously, the method 700 is suitably applied to a WCDMA system, i.e. a Wideband Code Division Multiple Access system, or a TD SCDMA system, i.e. a Time Division Synchronous Code Division Multiple Access system.

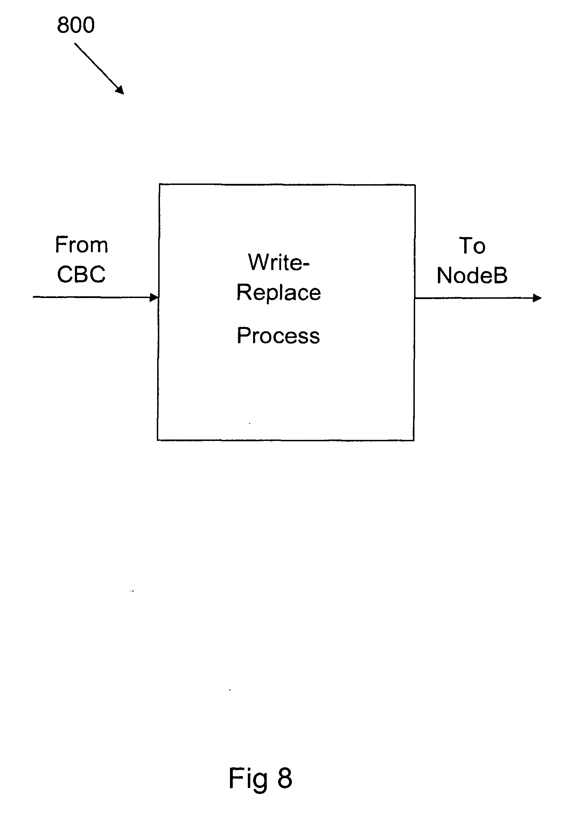

Fig 8 shows a schematic block diagram of an RNC 800, a Radio Network Controller, of the invention, with fig 8 being mainly focused on those functions of the RNC 800 which are added or amended by the invention.

The RNC of the invention is adapted to receive Write-Replace Requests/Indications from a CBC, which comprise the parameter "Paging ETWS indicator" and the parameter "Warning Type", and with or without the parameter "Warning Security Information". The RNC 800 is adapted to process these Requests/indications from the CBC, in that it forwards them to the proper NodeB, as specified by the CBC.

The Write-Replace Request/indication is processed by the RNC 800 in one of the two ways described above as being comprised in the invention, i.e. it transmits the information in the Requests/indications to the NodeB either in a dedicated message type for the primary warning notification and the verification information, or it lets the primary warning notification and the verification information be comprised in information elements, IEs, in a predefined message. Which of these two alternatives that is used by the RNC 800 of the invention is dependent on the system, both alternatives are encompassed by the present invention.

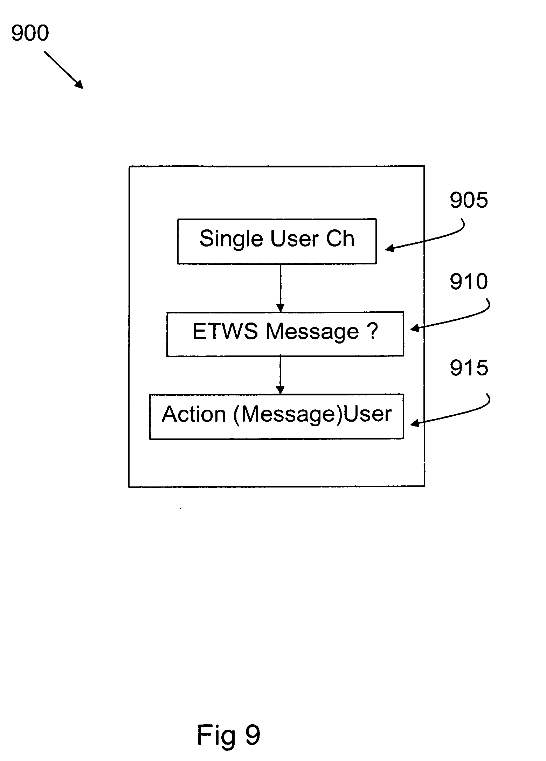

The invention also discloses a UE, a schematic block diagram of which is shown in fig 9, with the reference number 900. Fig 9 only shows those parts of the UE 900 which are primarily affected by the invention.

The UE 900 of the invention comprises a function 905 for receiving messages on a physical channel which is used for messages to single users, such as a paging channel, PCH. In addition, the UE 900 comprises a function 910 for recognizing messages on said channel as being ETWS messages, as opposed to, for example, paging messages or other messages which are usually transmitted on the physical channel in question. Such recognition is done by means of the message type, as disclosed by one embodiment of the invention, or by means of identifying one or more separate IEs in a message, as disclosed by another embodiment of the invention, both of which embodiments have been described in detail above in this text.

The invention is not limited to the examples of embodiments described above and shown in the drawings, but may be freely varied within the scope of the appended claims.

## Claims

1. A method (700) for an Earthquake and Tsunami Warning System, ETWS, in a cellular communications system (100), the method being **characterized by** comprising:
transmitting a predefined ETWS message (705) simultaneously to a plurality of user equipments, UEs (740), In one or more cells of the system (100), wherein
the ETWS message is transmitted on a physical channel (745) in the system, which physical channel is dedicated to messages to single UEs, and wherein
the ETWS message comprises a combination of a primary warning notification (710) and accompanying verification information (715) related to the primary warring notification.

2. The method (700) of claim 1, according to which the physical channel used is a paging channel (750) in the system (100).

3. The method (700) of claim 1 or 2, according to which the predefined ETWS message causes the UEs to listen (720) for a secondary warning notification in subsequent messages on the same channel.

4. The method (700) of any of claims 1-3, according to which the predefined ETWS message is of a message type which identifies (725) the predefined message, and causes a receiving UE (110) to treat the predefined message in a predefined manner.

5. The method (700) of any of claims 1-4, according to which the predefined ETWS message is of a dedicated message type (730) for the primary warning notification and the verification information.

6. The method (700) of any of claims 1-5, according to which the primary warning notification and the verification information are comprised in information elements (735) in the predefined ETWS message.

7. The method of any of claims 1-6, applied to a system of the Wideband Code Division Multiple Access kind, WCDMA, or the Time Division Synchronous Code Division Multiple Access kind, TD SCDMA.

8. An Earthquake and Tsunami Warning System, ETWS system, in a cellular communications system (100), **characterized in that** the ETWS system comprises:
means for transmitting a predefined ETWS message simultaneously to a plurality of UEs in one or more cells of the system (100), wherein the ETWS message is transmitted on a physical channel in the system, which physical channel is dedicated to messages to single UEs, and wherein the ETWS message comprises a combination of a primary warning notification and an accompanying verification information related to the primary warning notification.

9. The ETWS system of claim 8, according to which the physical channel used is a paging channel in the system (100).

10. The ETWS system of any of claims 8-9, according to which the predefined ETWS message is of a dedicated message type for the primary warning notification and the verification information.

11. The ETWS system of any of claims 8-10, according to which the primary warning notification and the verification information are comprised in information elements in the predefined ETWS message.

12. The ETWS system of any of claims 8-11, applied to a system of the Wideband Code Division Multiple Access kind, WCDMA, or the Time Division Synchronous Code Division Multiple Access kind, TD SCDMA.

13. A user equipment, an UE (900), for use in an Earthquake and Tsunami Warning System, ETWS, in a cellular communications system (100), the UE being **characterized by** comprising:
a function (905) adapted to receive a predefined ETWS message on a physical channel, which physical channel is dedicated to messages to single UEs, wherein the ETWS message comprise a combination of a primary warning notification and an accompanying verification information (715) related to the primary warning notification; and
a function (910) adapted to recognize an ETWS message on said channel as being an ETWS message.

14. The UE (900) of claim 13, in which the recognition of ETWS messages is done by means of the message type.

15. The UE (900) of claim 13 or 14, in which the recognition of ETWS messages is done by means of identifying one or more separate information elements, IEs, in a message on said channel.

16. The UE (900) of any of claims 13-15, in which the channel is a paging channel, PCH.

## Patentansprüche

1. Verfahren (700) für ein Erdbeben- und Tsunami-Warnsystem, ETWS, in einem zellulären Kommunikationssystem (100), wobei das Verfahren **dadurch gekennzeichnet ist, dass** es umfasst:
gleichzeitiges Übertragen einer vordefinierten ETWS-Nachricht (705) an eine Vielzahl von Benutzergeräten,UEs (740), in einer oder mehreren Zellen des Systems (100), worin
die ETWS-Nachricht auf einem physikalischen Kanal (745) im System übertragen wird, welcher physikalische Kanal für Nachrichten an einzelne UEs dediziert ist und worin
die ETWS-Nachricht eine Kombination aus einer primären Warnbenachrichtigung (710) und beigefügter Verifikationsinformation (715) umfasst, die die primäre Warnbenachrichtigung betrifft.

2. Verfahren (700) nach Anspruch 1, gemäß dem der verwendete physikalische Kanal ein Paging-Kanal (750) im System (100) ist.

3. Verfahren (700) nach Anspruch 1 oder 2, gemäß dem die vordefinierte ETWS-Nachricht bewirkt, dass die UEs auf eine zweite Warnbenachrichtigung in nachfolgenden Nachrichten auf demselben Kanal horchen (720).

4. Verfahren (700) nach einem der Ansprüche 1 bis 3, gemäß dem die vordefinierte ETWS-Nachricht ein Nachrichtentyp ist, der die vordefinierte Nachricht identifiziert (725) und bewirkt, dass ein empfangendes UE (110) die vordefinierte Nachricht auf eine vordefinierte Weise behandelt.

5. Verfahren (700) nach einem der Ansprüche 1 bis 4, gemäß dem die vordefinierte ETWS-Nachricht ein dedizierter Nachrichtentyp (730) für die primäre Warnbenachrichtigung und die Verifikationsinformation ist.

6. Verfahren (700) nach einem der Ansprüche 1 bis 5, gemäß dem die primäre Warnbenachrichtigung und Verifikationsinformation in Informationselementen (735) in der vordefinierten ETWS-Nachricht enthalten sind.

7. Verfahren nach einem der Ansprüche 1 bis 6, das auf ein System vom Typ Breitband-Codemultiplex-Mehrfachzugriff, WCDMA, oder vom Typ Zeitmultiplex-Synchroncodemultiplex-Mehrfachzugriff, TD SCDMA angewendet wird.

8. Erdbeben- und Tsunami-Warnsystem, ETWS-System, in einem zellulären Kommunikationssystem (100), **dadurch gekennzeichnet, dass** das ETWS-System umfasst:
Mittel zum gleichzeitigen Übertragen einer vordefinierten ETWS-Nachricht an eine Vielzahl von UEs in einer oder mehreren Zellen des Systems (100), worin die ETWS-Nachricht auf einem physikalischen Kanal im Systemübertragen wird, welcher physikalische Kanal für Nachrichten an einzelne UEs dediziert ist und worin die ETWS-Nachricht eine Kombination aus einer primären Warnbenachrichtigung und einer beigefügten Verifikationsinformation umfasst, die die primäre Warnbenachrichtigung betrifft.

9. ETWS-System nach Anspruch 8, gemäß dem der verwendete physikalische Kanal ein Paging-Kanal im System (100) ist.

10. ETWS-System nach einem der Ansprüche 8 bis 9, gemäß dem die vordefinierte ETWS-Nachricht ein dedizierter Nachrichtentyp für die primäre Warnbenachrichtigung und die Verifikationsinformation ist.

11. ETWS-System nach einem der Ansprüche 8 bis 10, gemäß dem die primäre Warnbenachrichtigung und die Verifikationsinformation in Informationselementen in der vordefinierten ETWS-Nachricht enthalten sind.

12. ETWS-System nach einem der Ansprüche 8 bis 11, das auf ein System vom Typ Breitband-Codemultiplex-Mehrfachzugriff, WCDMA, oder vom Typ Zeitmultiplex-Synchroncodemultiplex-Mehrfachzugriff, TD SCDMA angewendet wird.

13. Benutzergerät, UE (900), zur Verwendung in einem Erdbeben- und Tsunami-Warnsystem, ETWS, in einem zellulären Kommunikationssystem (100), wobei das UE **dadurch gekennzeichnet ist, dass** es umfasst:
eine Funktion (905), die zum Empfang einer vordefinierten ETWS-Nachricht auf einem physikalischen Kanal angepasst ist, welcher physikalische Kanal für Nachrichten an einzelne UEs dediziert ist, worin die ETWS-Nachricht eine Kombination aus einer primären Warnbenachrichtigung und einer beigefügten Verifikationsinformation (715) umfasst, die die primäre Warnbenachrichtigung betrifft; und
eine Funktion (910), die dazu angepasst ist, eine ETWS-Nachricht auf dem Kanal als eine ETWS-Nachricht zu erkennen.

14. UE (900) nach Anspruch 13, in dem das Erkennen von ETWS-Nachrichten mittels des Nachrichtentyps ausgeführt wird.

15. UE (900) nach Anspruch 13 oder 14, in dem das Erkennen von ETWS-Nachrichten mittels Identifikation von einem oder mehreren separaten Informationselementen, IEs, in einer Nachricht auf dem Kanal ausgeführt wird.

16. UE (900) nach einem der Ansprüche 13 bis 15, worin der Kanal ein Paging-Kanal, PCH, ist.

## Revendications

1. Procédé (700) destiné à un système d'alerte aux séismes et aux tsunamis, ETWS, dans un système de communication cellulaire (100), le procédé étant **caractérisé en ce qu'**il comprend les étapes ci-dessous consistant à :
transmettre un message de système ETWS prédéfini (705), simultanément, à une pluralité d'équipements d'utilisateur, UE, (740), au sein d'une ou plusieurs cellules du système (100), dans lequel
le message de système ETWS est transmis sur un canal physique (745) dans le système, lequel canal physique est dédié à des messages envoyés vers des équipements UE uniques, et dans lequel
le message de système ETWS comprend une combinaison d'une notification d'alerte principale (710) et d'informations de vérification d'accompagnement (715) connexes à la notification d'alerte principale.

2. Procédé (700) selon la revendication 1, dans lequel le canal physique utilisé est un canal de radiomessagerie (750) dans le système (100).

3. Procédé (700) selon la revendication 1 ou 2, dans lequel le message de système ETWS prédéfini amène les équipements UE à écouter (720) en vue de détecter une notification d'alerte secondaire dans les messages subséquents sur le même canal.

4. Procédé (700) selon l'une quelconque des revendications 1 à 3, dans lequel le message de système ETWS prédéfini est d'un type de message qui identifie (725) le message prédéfini, et amène un équipement UE récepteur (110) à traiter le message prédéfini d'une manière prédéfinie.

5. Procédé (700) selon l'une quelconque des revendications 1 à 4, dans lequel le message de système ETWS prédéfini est d'un type de message dédié (730) pour la notification d'alerte principale et les informations de vérification.

6. Procédé (700) selon l'une quelconque des revendications 1 à 5, dans lequel la notification d'alerte principale et les informations de vérification sont incluses dans des éléments d'information (735) au sein du message de système ETWS prédéfini.

7. Procédé (700) selon l'une quelconque des revendications 1 à 6, appliqué à un système du type « accès multiple par répartition en code à large bande », WCDMA, ou du type « accès multiple par répartition en code synchrone à répartition dans le temps », TD SCDMA.

8. Système d'alerte aux séismes et aux tsunamis, ou système ETWS, dans un système de communication cellulaire (100), **caractérisé en ce que** le système ETWS comprend :
un moyen pour transmettre un message de système ETWS prédéfini, simultanément, à une pluralité d'équipements UE, au sein d'une ou plusieurs cellules du système (100), dans lequel le message de système ETWS est transmis sur un canal physique dans le système, lequel canal physique est dédié à des messages envoyés vers des équipements UE uniques, et dans lequel le message de système ETWS comprend une combinaison d'une notification d'alerte principale et d'informations de vérification d'accompagnement connexes à la notification d'alerte principale.

9. Système ETWS selon la revendication 8, dans lequel le canal physique utilisé est un canal de radiomessagerie dans le système (100).

10. Système ETWS selon l'une quelconque des revendications 8 à 9, dans lequel le message de système ETWS prédéfini est d'un type de message dédié pour la notification d'alerte principale et les informations de vérification.

11. Système ETWS selon l'une quelconque des revendications 8 à 10, dans lequel la notification d'alerte principale et les informations de vérification sont incluses dans des éléments d'information au sein du message de système ETWS prédéfini.

12. Système ETWS selon l'une quelconque des revendications 8 à 11, appliqué à un système du type « accès multiple par répartition en code à large bande », WCDMA, ou du type « accès multiple par répartition en code synchrone à répartition dans le temps », TD SCDMA.

13. Équipement d'utilisateur, UE (900), destiné à être utilisé dans un système d'alerte aux séismes et aux tsunamis, ETWS, dans un système de communication cellulaire (100), l'équipement UE étant **caractérisé en ce qu'**il comprend :
une fonction (905) apte à recevoir un message de système ETWS prédéfini sur un canal physique, lequel canal physique est dédié à des messages envoyés vers des équipements UE uniques, dans lequel le message de système ETWS comprend une combinaison d'une notification d'alerte principale et d'informations de vérification d'accompagnement (715) connexes à la notification d'alerte principale; et
une fonction (910) apte à reconnaître un message de système ETWS sur ledit canal comme étant un message de système ETWS.

14. Équipement UE (900) selon la revendication 13, dans lequel la reconnaissance de messages de système ETWS est mise en oeuvre par le biais du type de message.

15. Équipement UE (900) selon la revendication 13 ou 14, dans lequel la reconnaissance de messages de système ETWS est mise en oeuvre en identifiant un ou plusieurs éléments d'information distincts, EI, dans un message sur ledit canal.

16. Équipement UE (900) selon l'une quelconque des revendications 13 à 15, dans lequel le canal est un canal de radiomessagerie, PCH.
